Europäisches Patentamt

(19) European Patent Office

Office européen des brevets

(11) Publication number: **0 170 526**
**B1**

(12) **EUROPEAN PATENT SPECIFICATION**

(45) Date of publication of patent specification: **27.09.89**

(51) Int. Cl.⁴: **B 65 D 81/32**

(21) Application number: **85305460.9**

(22) Date of filing: **31.07.85**

(54) Container and dispenser for a two-component product.

(30) Priority: **31.07.84 US 635380**

(43) Date of publication of application:
**05.02.86 Bulletin 86/06**

(45) Publication of the grant of the patent:
**27.09.89 Bulletin 89/39**

(84) Designated Contracting States:
**DE FR GB**

(56) References cited:
**GB-A- 886 494**
**US-A-3 964 643**

(73) Proprietor: **LOCTITE CORPORATION**
**705 North Mountain Road**
**Newington, Connecticut 06111 (US)**

(72) Inventor: **Dunn, David John**
**11335 Heritage Drive**
**Twinsburg Ohio 44087 (US)**

(74) Representative: **Marchant, James Ian et al**
**Elkington and Fife Beacon House 113 Kingsway**
**London WC2B 6PP (GB)**

Courier Press, Leamington Spa, England.

## Description

This invention relates to a combined container and dispenser for a two-component product particularly for relatively small amounts of curable liquids which require a second component to accelerate the cure by intimate mixture therewith. More particularly, it relates to such dispensers which are disposable and contain approximately a unit dose or amount of primary material for a single application, such as the adhering or sealing of parts to each other.

So-called "unit dose" disposable packaging of liquids is known in some industries, for example, the medical industry, in which single application amounts of a liquid to be dispensed are contained in a sealed, rupturable ampule further contained within a sealed flexible dispenser. The dispenser may be squeezed to rupture the ampule and the liquid forced out of the dispensing orifice by further pressure. These types of packages have the advantage of allowing the user to quickly apply a relatively exact amount of liquid, with no leftover material to dispose of, or waste, or prevent against contamination. While on a unit amount basis the cost is generally higher than for packages of greater content, the elimination of waste and over-purchasing usually overrides, and the effective cost to the user is lower.

This concept has been extended to the dispensing of liquid adhesives, such as cyanoacrylate adhesives.

Morane et al., U.S. Patent 3,964,643, June 22, 1976, discloses multi-component container/dispensers in which one or more components, which are to be kept separate from yet another component, are contained in a frangible tube held within a flexible outer jacket, The, jacket has a rigid portion positioned to exert a fracturing pressure on the tube when the jacket is flexed or deformed. The other component, apparently a liquid, is contained within the jacket, but outside the tube. As described and illustrated, the dispenser is much larger than the unit dose containers just discussed. In fact, the outer jacket must have a relatively rigid portion positioned proximate the frangible part of the inner tube for the purpose of exerting a rupturing pressure on the tube. It is also noted that, at column 4, two-component adhesives are a possible application of the described containers.

It is just such an application which is contemplated herein, particularly where the relative difference between the needed amounts of the two-components is quite large. For example, there are adhesive systems including anaerobic adhesives, acrylic or toughened acrylic adhesives, liquid epoxies, and cyanoacrylate adhesives, and the like, in which a liquid adhesive base formulation comprises a first component, and a second component which may be used in very small amounts, may be combined with the first component to greatly speed up the cure time of the adhesive material itself. Such second components are variously referred to as accelerators, primers or catalysts. After cure of the base adhesive formulation has been initiated, these materials, simply stated, accelerate the cure.

Of course once combined with the accelerator, such an adhesive has a very short holding time and must be used relatively quickly. Therefore, when relatively large amounts are to be used, the base adhesive is packaged separately from the accelerator, and the two are normally combined in situ on a part or parts to be joined.

However, there are a number of applications in which a small total amount such as a drop or several drops, will suffice, In these situations, it would be quite advantageous to have a unit dose container and dispenser in one, in which the two components may be kept separate until use, and in use may be swiftly combined and dispensed.

It has been found that the configurations and teachings of the Morane et al. patent, discussed above, are inadequate for a unit dose two-component product. It is particularly desirable to combine the accelerator with the adhesive uniformly, as the adhesive is exiting the dispenser orifice, or as close to it as possible. Otherwise, a two-component mixture, left in for example the relatively large jacket disclosed in Morane et al., will start to form gel pockets as the accelerator "kicks over" the adhesive. Thus it will not be advantageous to have the second component completely surrounding the ampule, or tube, containing the first. Additionally, for the adhesive systems mentioned above, the liquid accelerators frequently do not mix well with liquid adhesives, Again having one liquid surrounding the ampule, or tube, with the other is not desirable for this reason as well.

It is a principal object of the invention to provide a combined container and dispenser for a two-component product in which at least one component is a liquid, in which the two components are kept separate until use, and in which the components may be uniformly mixed upon usage as the liquid is forced from the container through the orifice thereof. It is a further object to provide such a dispenser in single-dose size containing small amounts of liquid adhesive and an accelerator thereof.

The present invention provides a combined container and dispenser of liquid material comprising two-components which are to be kept separate within the container until use and thereafter mixed upon dispensing, the container and dispenser comprising an outer flexible sleeve having a dispensing orifice at one end and a seal at the other end, and an inner sealed frangible ampule within the sleeve, the ampule containing a first liquid component, characterised, in that a fibrous material within the sleeve is positioned between the dispensing orifice and the body portion of the ampule closest to the dispensing orifice, the fibrous material containing on or within its fibers a sound component of the liquid to be dispensed. The fibrous material may also be positioned at least partially around the body portion of the ampule closest to the dispensing orifice. When ready for use, the outer sleeve is compressed sufficiently to break the ampule, and further pressure causes the liquid curable material to flow through and past the fibrous material, thus becoming combined with the accelerant just before exiting the orifice.

This invention will be described with reference to two-component liquid adhesive systems in which the speed of cure of the liquid adhesive is accelerated by the presence of relatively small amounts of an accelerator, catalyst or primer. As before indicated a number of these types of adhesive systems are well known in the literature. For example, anaerobic adhesives, such as disclosed in U.S. Patents 3,425,988 and 3,591,438, and in many other references, are well known to be accelerated in cure by the presence of a transition metal-containing compound, such as a copper or iron salt. Other accelerators of anaerobic cure are known as well. A growingly familiar class of adhesives known as tough acrylics, which are formulated with elastomeric or rubber-type additives, are generally two-component systems, in which the activating or accelerating component is comprised of an aldehyde-amine condensation product, a preferred species of which is a butyraldehyde-aniline material, commercially sold by Uniroyal under the name Beutene, or by DuPont under the name DuPont 808. See for example European Patent Publications nos. 0,034,046 and 0,044,166. Although cyanoacrylate adhesives, known for fast and strong bonding, are normally one-component materials, accelerators of cyanoacrylate cure are known and thus these also may be formulated as two-component systems. Of course, epoxy-based systems are typically formulated as two-component systems in which the hardener component is kept separate from the epoxy resin until use. Liquid epoxy systems are known and thus those materials as well may be advantageously packaged in the dispenser of this invention.

Essentially, the dispenser of this invention may be used with any chemical formulation or adhesive formulation in which an activating component is to be kept separate from the primary material until use.

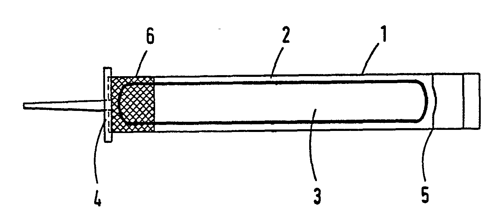

Reference is now made to the drawing which is a side elevational view of a preferred embodiment of the dispenser of this invention. The body of the dispenser is cylindrical, although as will become obvious from the further description, the exact geometric shape is not of the essence of the invention. An outer sleeve 1, comprised of a flexible or compressible material, completely contains an ampule or tube 2, which in turn contains a quantity of the base liquid material 3, for example a liquid adhesive material. Ampule 2 is completely sealed by any suitable process, and may be comprised of any frangible or rupturable material which is compatible with the liquid material 3. Typically, ampules of this type are thin walled glass structures, but may obviously be composed of other materials such as plastics. In the illustration of the drawing, the diameter of the ampule is smaller than the diameter of the sleeve, but preferably fits relatively snugly inside the sleeve. While the ratio of the respective diameters is not critical, a preferred ratio is about 0.8 to 0.9.

Again referring to the drawing, sleeve 1 possesses or is attached to, an orifice or nozzle assembly 4 for dispensing purposes. The nozzle assembly 4 and sleeve 1 may be of a unitary construction or may be initially separate and sealingly joined by any suitable method. In the illustration, and in a currently preferred embodiment the nozzle assembly and sleeve are initially separate and are then subsequently seated together to form a seal through which the liquid material may ultimately pass out through the nozzle.

After the ampule 2 is inserted in sleeve 1, the other end of the sleeve is sealed by any suitable means or material. A preferred method is to pressure inject a hot melt adhesive material into the sleeve approximately touching the other end of the ampule 2 to form seal 5.

The distinguishing feature of the dispenser/ container of this invention is the presence of fibrous material 6 between the nozzle assembly 4 and the end of the ampule 2 nearest the nozzle assembly. This material 6 can be formed of any absorbent or retentive material such as gauze, fiber glass, or other suitable fabric material. In practice, the material is dipped into or otherwise has coated on it a predetermined appropriate amount of the activating or accelerating second component. Before the ampule 2 is inserted into sleeve 1, fibrous material 6 is positioned in the sleeve at the nozzle end thereof such that when the ampule is placed therein, fibrous material 6 will be positioned between the nozzle assembly and the forward end of the ampule.

In this manner, when the ampule is broken by compression of the sleeve, the liquid material will be caused to flow around and through the fibrous material on its path to the nozzle, thereby entraining sufficient accelerant or activator to speed up the cure of the liquid material when placed on the part or parts to be joined.

The amount of fibrous material 6 to be used and the amount of activator or second component material to be contained in it is a matter of choice depending upon the exact two-component system to be dispensed. In a preferred aspect, at least some of the body portion of the ampule nearest the nozzle assembly will be in contact with and surrounded by the fibrous material to ensure maximum .contact between the liquid-in the ampule and the material itself. However, as before stated, it is not desirable or advantageous for the fibrous material to completely surround the ampule. Thus, for purposes of this invention, the fibrous material 6 must be positioned between the nozzle assembly and orifice 4 and the body portion of the ampule nearest same such that a majority of the liquid component 3 within the ampule 2 will be caused to pass through the fiber 6 upon rupturing the ampule and upon dispensing pressure being applied to sleeve 1.

The dimensions and materials of construction of the inventive dispensers are not critical per se to the invention. The dimensions will be largely dependent upon the amount of material to be dispensed and what amount constitutes a unit dose. For example, in the case of the unit dose anaerobic adhesive example to be discussed below, the ampule itself will have an outer diameter of approximately 6.5 mm, and the flexible sleeve length is approximately 5.45 cm. For best results in terms of combining the two components as stated above, it is preferred that the ampule make loose frictional contact with the inside of the sleeve; in other words, the diameters of the ampule and sleeve should be such that the ampule may be easily inserted therein but without allowing much side to side movement thereafter.

The frangible ampule 2 is preferably comprised of a thin-walled glass, the composition of which obviously should not contain any components which would prematurely cause a curing reaction in the liquid component 3. For most liquid adhesive applications, it has been found that boro-silicate glasses are adequate. Compatible frangible plastics may be used as well. The ampule wall thickness, again while not critical, should be great enough to withstand normal handling pressures, but thin enough to be readily rupturable upon use. Using the ampule and sleeve dimensions mentioned above, a useful ampule will have wall thicknesses of between about 0.10 and 0.38 mm (4 and 15 mils).

For cyanoacrylate adhesives it is highly recommended to use an ampule container formed from a borosilicate glass composition, and particularly a glass composition in which the boron content ranges from about 3.10 to about 3.75% by weight of the glass since such a glass has an unexpectedly profound beneficial effect on the stability of the alpha-cyanoacrylate adhesive composition stored therein. Thus, as will be hereinafter demonstrated, alpha-cyanoacrylate adhesive compositions packaged in borosilicate glass containers undergo minimal viscosity changes when stored at temperatures of 23° to 82°C for more than 500 days whereas the same adhesive when stored in soda-lime glass containers undergo substantial viscosity changes when stored at these same temperatures and time intervals, and undergo even greater changes in viscosity when stored in plastic containers.

Borosilicate glasses which have been found to be advantageous to prepare the frangible glass containers used in the practice of the present invention generally contain about 70 to about 73% by weight $SiO_2$, 10 to about 12% by weight $B_2O_3$, and 15 to about 20% by weight of aluminium, alkali and alkaline earth metal oxides such as $Al_2O_3$, $Na_2O$, $K_2O$, BaO and CaO. Borosilicate glasses found to be preferred in the practice of the present invention have the following composition range:

$B_2O_3$ about 10 to about 12% by weight
$SiO_2$ about 70 to about 72% by weight
$Al_2O_3$ about 6 to about 8% by weight
$Na_2O$ about 5 to about 7% by weight
$K_2O$ about 1 to about 3% by weight
BaO about 0 to about 3% by weight
CaO about 0 to about 2% by weight

Sleeve 1 is comprised of flexible material, and as indicated before, must be compressible enough to assist in rupturing of the ampule 2 under finger-pressure, but must be sturdy enough to withstand normal handling, and can be composed of any suitable material with any suitable wall thickness to possess these characteristics. Continuing with the example of the dimensions just discussed, sleeve wall thickness may usefully range from about 0.13 to 1.27 mm (5 to 50 mils) depending on the material of construction. A preferred material is high or low density polyethylene, and with that material the wall thickness may usefully range from about 0.64 to 1.14 mm (25 to 45 mils). Other materials of construction for the sleeve 1 will be apparent to those skilled in the art, such as, for example, Nylon, polyethylene-terephthalate, polyacrylonitrile, polyvinylidine fluoride, and polypropylene, and the like.

Example

An anaerobically-curable adhesive formulation is prepared comprising approximately, in percentages by weight, 60% hydroxypropyl methacrylate, 38.2% urethane-methacrylate resin, 0.245% of a 95:5 mixture of polyethyleneglycol dimethacrylate and naphthoquinone, 0.49% saccharin, 0.08% acetylphenyl hydrazine, 0.2% paracresol, 0.49% cumene hydroperoxide, and the remainder a mixture of metal chelator and methacrylate resin. As is well known, anaerobically-curable adhesives cure rapidly upon the exclusion of oxygen from the system, are generally initiated by the presence of hydroperoxy-components, and are capable of being accelerated in cure by the presence of transition metal ions. The adhesive formulation just described is then placed in a borosilicate glass ampule described above which is initially open at one end, after the ampule is flushed with dry nitrogen gas. The open end of the ampule is then immediately, after filling, preheated and sealed using a gas-oxygen flame where the open end is drawn off to seal the ampule under ambient atmospheric conditions. A small circular piece of gauze having a diameter of 21 mm is then dipped in a 15% solution of 12% copper naphthenate in mineral spirits. The gauze is permitted to dry and is then inserted in a low density polyethylene sleeve having the dimensions described above and having a nozzle assembly sealingly attached to one end. The gauze is positioned adjacent the orifice of the nozzle assembly and is then flattened out against the walls of the sleeve approximate thereto. The filled ampule is then inserted into the sleeve as far forward as possible such that the gauze surrounds the forward end of the ampule and approximately 20% of the sides of the ampule.

A white hot melt adhesive sold under the trademark Swift 84001 is pressure injected into the sleeve into virtual contact with the other end of the ampule, thus sealing the sleeve at the end opposite the nozzle assembly. The hot melt is conveniently applied using a Nordson model HM18 system, and is dispensed at a temperature of about 135°C (275°F) under approximately 34.5 to 69 kPa (5 to 10 psi) pressure.

To dispense the adhesive, finger pressure is applied approximately halfway up the sleeve containing the ampule until the ampule is broken. When the dispenser is inverted such that the nozzle is pointing downward, it will be observed that the bulk of the liquid anaerobic adhesive flows down the sides of the sleeve toward the nozzle, around and through the gauze containing the copper salt accelerator, and continued finger pressure will force the adhesive through the gauze and out through the nozzle. When applied to parts to be joined such as metal to metal parts, or metal to glass, and the parts mated to exclude air, fixture occurs typically within 30 to 60 seconds. Without the copper salt accelerator present in the dispenser, fixture could take as long as 60 minutes.

After breaking of the ampule, if the dispenser is oriented such that the nozzle is pointing upward, it will be seen that the adhesive is pulled away from the gauze containing the copper salt accelerator and therefore has much less tendency to prematurely gel than would be the case if the accelerator component completely surrounded the ampule. Therefore, even after rupture of the ampule, the user has much greater flexibility in terms of time to dispense the adhesive without fear of premature polymerization.

As is obvious from the above description, the container/dispenser of this invention has broad applicability for two-component liquid systems which rely for their effectiveness on the rapid and uniform mixture of the two components, and where it is desirable that the mixture occur essentially when the adhesive is being dispensed. While the invention has been described with respect to two-component adhesive formulations, it is possible that the dispenser will be useful for other two-component liquid systems. Several are mentioned in the Morane et al. reference discussed above. Others will be obvious from those skilled in the art of dispensing liquids. All of these systems are considered to be a matter of choice and are deemed to be embraced by the concept of the invention just described.

## Claims

1. A combined container and dispenser of liquid material comprising two-components which are to be kept separate within the container until use and thereafter mixed upon dispensing, the container and dispenser comprising an outer flexible sleeve having a dispensing orifice at one end and a seal at the other end, and an inner sealed frangible ampule within the sleeve, the ampule containing a first liquid component characterised in that a fibrous material within the sleeve is positioned between the dispensing orifice and the body portion of the ampule closest to the dispensing orifice, the fibrous material containing on or within its fibres a second component of the liquid to be dispensed.

2. A container and dispenser as claimed in claim 1 characterised in that the fibrous material is also positioned at least partially around the body portion of the ampule closest to the dispensing orifice.

3. A container and dispenser as claimed in claim 1 or 2 characterised in that the ampule is rupturable by the application of finger pressure upon the flexible sleeve.

4. A container and dispenser as claimed in any of claims 1 to 3 characterised in that the second component is an activator for the liquid contained within the ampule.

5. A dispenser and container as claimed in claim 4 characterised in that the liquid in the ampule is an adhesive material and in that the second component is an accelerator of cure of the adhesive.

6. A dispenser and container as claimed in claim 5 characterised in that the ampule consists of a glassy material and in that the sleeve is a flexible plastic.

## Patentansprüche

1. Kombinierter Behälter und Ausgabeeinrichtung für flüssiges Material mit zwei Komponenten, die in dem Behälter bis zum Gebrauch voneinander getrennt sind und anschliessend bei der Ausgabe miteinander vermischt werden, wobei der Behälter und die Ausgabeeinrichtung eine äußere, flexible Hülse aufweisen, die eine Ausgabeöffnung an einem Ende und eine Abdichtung am anderen Ende hat, und wobei eine innere, dicht abgeschlossene, brechbare Ampulle in der Hülse vorgesehen ist, welche eine erste Flüssigkeitskomponente enthält, dadurch gekennzeichnet, daß ein Fasermaterial in der Hülse zwischen der Ausgabeöffnung und dem der Ausgabeöffnung am nächsten liegenden Körperabschnitt der Ampulle angeordnet ist, wobei das Fasermaterial auf oder in seinen Fasern eine zweite Komponente der auszugebenden Flüssigkeit enthält.

2. Behälter und Ausgabeeinrichtung nach Anspruch 1, dadurch gekennzeichnet, daß das Fasermaterial auch wenigstens teilweise um den der Ausgabeöffnung am nächsten liegenden Körperabschnitt der Ampulle vorgesehen ist.

3. Behälter und Ausgabeeinrichtung nach Anspruch 1 oder 2, dadurch gekennzeichnet, daß die Ampulle durch das Aufbringen eines Fingerdrucks auf die flexible Hülse durchbrechbar ist.

4. Behälter und Ausgabeeinrichtung nach einem der Ansprüche 1 bis 3, dadurch gekennzeichnet, daß die zweite Komponente ein Aktivator für die in der Ampulle enthaltene Flüssigkeit ist.

5. Behälter und Ausgabeeinrichtung nach Anspruch 4, dadurch gekennzeichnet, daß die Flüssigkeit in der Ampulle ein Klebstoffmaterial ist, und daß die zweite Komponente ein Härtungsbeschleuniger für den Klebstoff ist.

6. Behälter und Ausgabeeinrichtung nach Anspruch 5, dadurch gekennzeichnet, daß die Ampulle aus einem glasartigen Material besteht, und daß die Hülse ein flexibler Kunststoff ist.

**Revendications**

1. Conteneur-distributeur combiné pour matière liquide constituée de deux composants qui doivent être maintenus séparés à l'intérieur du conteneur jusqu'à l'emploi et ensuite mélangés consécutivement à la distribution, le conteneur-distributeur comprenant un manchon externe souple ayant un orifice de distribution à une extrémité et une fermeture à l'autre extrémité, et une ampoule interne fermée brisable à l'intérieur du manchon, l'ampoule contenant un premier composant liquide, caractérisé en ce qu'une matière fibreuse est disposée à l'intérieur du manchon entre l'orifice de distribution et la partie du corps de l'ampoule, la plus proche de l'orifice de distribution, la matière fibreuse contenant sur ses fibres ou dans celles-ci un second composant du liquide à distribuer.

2. Conteneur-distributeur suivant la revendication 1, caractérisé en ce que la matière fibreuse est également disposée au moins partiellement autour de la partie du corps de l'ampoule la plus proche de l'orifice de distribution.

3. Conteneur-distributeur suivant la revendication 1 ou 2, caractérisé en ce que l'ampoule peut être brisée par l'application avec les doigts d'une pression sur le manchon souple.

4. Conteneur-distributeur suivant l'une quelconque des revendications 1 à 3, caractérisé en ce que le second composant est un activateur pour le liquide contenu à l'intérieur de l'ampoule.

5. Distributeur-conteneur suivant la revendication 4, caractérisé en ce que le liquide dans l'ampoule est une matière adhésive et en ce que le second composant est un accélérateur du durcissement de l'adhésif.

6. Distributeur-conteneur suivant la revendication 5, caractérisé en ce que l'ampoule consiste en verre et en ce que le manchon est en matière plastique souple.